# EUROPEAN PATENT APPLICATION

(11) **EP 4 604 381 A1**
(43) Date of publication of application: **20.08.2025**
(21) Application number: 24382154.3
(22) Date of filing: 16.02.2024
(51) Int. Cl.: H02P 4/00, H02P 5/74, H02P 27/02, H02P 27/06, F25B 49/02

(54) **METHOD AND SYSTEM FOR SWAPPING DRIVES OF MOTOR-DRIVEN UNITS OF A MOTOR DRIVEN UNIT SYSTEM**

(71) Applicant: Siemens Mobility GmbH, 81739 München (DE)
(72) Inventor: Sosa Ajates, Ignacio, 28913 Leganés (Madrid) (ES)
(74) Representative: Siemens Patent Attorneys

(57) **Abstract**

The invention relates to a control system (14) and a method for controlling an operation of motor-driven units of an MDU system (15), the latter comprising a first motor-driven unit (151) comprising a first motor (152) and a second motor-driven unit (153) comprising a second motor (154), said control system (14) comprising:
- a variable frequency drive - hereafter VFD - (141) configured for outputting an electrical signal E1 configured for powering one motor among said first and second motors (152, 154), wherein a frequency of said electrical signal E1 is configured for varying in function of a control signal CD received by the VFD (141);
- a powering switch (142) comprising two states, namely an ON state and an OFF state, wherein in the ON state, the powering switch (142) is configured for outputting an electrical signal E2 configured for powering the other motor among said first and second motors (152, 154), and in the OFF state, the powering switch (142) is configured for switching off said FS motor;
characterized in that it further comprises
- a swapping component (143) configured for switching the powering of the first motor (152) from the electrical signal E1 to the electrical signal E2 and of the second motor (154) from the electrical signal E2 to the electrical signal E1, and vice versa.

## Description

### Technical Field

The present invention concerns a system comprising multiple motor-driven units, i.e. a system with more than one motor-driven unit. Such system will be referred to as "MDU system" hereafter. A typical example of such MDU system is a multi-compressors system comprising more than one compressor, and that is typically used in climate control systems, like heating, ventilation, and air conditioning systems, commonly referred to as HVAC systems or in refrigerating systems used in galley/catering systems. Said compressors systems are notably used for compressing a refrigerant/coolant fluid that is used as a medium for heat transfer. Climate control and refrigerating systems, like said HVAC system, are typically used for controlling and regulating environmental conditions, usually the temperature of air, in an enclosed space. In the following, for explaining the context of the invention, the HVAC system will be taken as a reference example of the MDU system.

### Background Art

State of the art HVAC systems, like air conditioner or heat pump, usually comprise at least one compressor configured to compress a refrigerant fluid used to cool air provided to said enclosed space. The compressor comprises a motor whose speed controls a rate of refrigerant fluid flow that is compressed by the compressor. One can distinguish two types of compressors: single speed (also called fixed speed) compressors and variable speed compressors. The single speed compressor, as indicated by its name, operates at a single speed because the motor is powered by a constant power supply in terms of voltage, current and frequency, and therefore always at 100% of its working capacity, or in a partial but fixed rate of its working capacity (e.g. 50% of its full working capacity) by means for instance of external mechanical devices like capacity valves, hot gas by pass valves, etc., but always in a discrete working rate (non-adjustable). The variable speed compressor might have its working capacity modulated by varying the speed of its motor, and might be better adapted to environmental conditions and/or working capacity needs, e.g. cooling capacity needs (people or other thermal loads inside the enclosed space could be variable in short periods of time, like the quantity of passengers in a train). For this purpose, when variable speed compressors are used, the HVAC system comprises a variable-frequency drive (hereafter "VFD") configured for controlling the speed of the compressor motor. The VFD is typically an AC motor drive that is able to control the speed and torque of the compressor motor by varying the frequency of the electrical power supplied to said motor, and, wherever necessary its voltage and/or current.

Both compressors have their own advantages and disadvantages. For instance, the single speed compressor is preferred when a demand for compression fluctuates little, i.e. is almost constant. For such constant working, the single speed compressor might be more efficient than the variable speed compressor, since designed specifically for said single speed. Additionally, it is technically simpler, and therefore also cheaper. At the opposite, as soon as the demand for compression fluctuates more significantly, the variable speed compressor becomes more efficient and enables to save energy with respect to a single speed compressor. For instance, the cooling power modulation of fixed speed compressor is less efficient (in terms of energy consumption) than variable speed compressor.

In case of a compressor system using multiple compressors cooperating together for controlling and regulating environmental conditions of a same enclosed space, different configurations have been proposed:
- Using only compressors at fixed speed;
- Using only compressors at variable speed;
- Using a combination of variable and fixed speed compressors.

Typically, if a HVAC system comprises two compressors working each at variable speed, then the motor of each compressor is controlled by its own VFD (i.e. one VFD per compressor). This enables to have a "symmetric" working life for both compressors, enabling maintenance tasks taking place at a same date for both compressors. However, such systems comprising two compressors operating each at variable speed are more expensive given that variable speed compressors are technically more complex, due to the need of two separate VFD, and also heavier and more space demanding because the VFD are usually significantly comparable to the compressor in terms of weight and dimensions, which is something critical for system specially designed for mobile applications . For this reason, it has been proposed to use a HVAC system comprising a fixed speed compressor and a variable speed compressor. However, in such a case, the compressors are aging differently, because the variable speed compressor will be running whole the time to provide for instance a properly adjusted cooling power meanwhile the fixed compressor will run only when the cooling capacity demanded is higher than 50% of the total cooling capacity of the system, requiring for instance individual, temporarily separated, maintenance tasks for the compressors. This can be very problematic when the HVAC system equips for instance a train. Indeed, given that each compressor requires maintenance tasks at a different time, it decreases the overall availability time of the train due to the non-simultaneous maintenance activities for the compressors, resulting then in higher operation costs and lower operation time. Therefore, while the combination of a variable speed compressor and a fixed speed compressor makes the HVAC system comprising said compressors more efficient in terms of energy saving with respect to using two compressors operating at fixed speed, is technically more simple and thus cheaper with respect to using only compressors at variable speed, it still suffers from disadvantages, notably when installed in a vehicle, due to the increase of maintenance time during which the vehicle is unavailable due to separate maintenance activities for said compressors.

The above-mentioned problematic applies not only to compressor systems, but generally to systems comprising several motor-driven units, like water pump, or compressor, power machine. Therefore, there is still a need for MDU systems that overcome the above-mentioned problematic.

### Summary of Invention

An objective of the present invention is thus to propose a system and a method for controlling an operation of several motor-driven units, e.g. several compressors of a MDU system, e.g. a compressor system typically used in a climate control system like a HVAC system, wherein said system and method are able to balance a use of the motor-driven units of such MDU system, notably so that maintenance activities may take place at a same time for said motor-driven units.

This objective is achieved by the measures taken in accordance with the independent claims. Further advantageous embodiments are proposed by the dependent claims.

More precisely, the present invention proposes a control system for controlling an operation of motor-driven units, e.g. compressors, of a MDU system, e.g. a compressor system, notably by swapping respective motor's drives of said motor-driven units, or for instance by swapping their power supplies, said MDU system being for instance a compressor system that is part of a climate control system, like a HVAC system, said MDU system comprising a first motor-driven unit, e.g. a first compressor, comprising a first motor and a second motor-driven unit, e.g. a second compressor, comprising a second motor, said control system comprising:
- a VFD configured for outputting an electrical signal E1 configured for powering one motor among said first and second motors - the motor being powered by the electrical signal E1 being called hereafter the variable speed motor or VS motor, and by analogy the VS motor-driven unit, e.g. the VS compressor, being then the motor-driven unit comprising the VS motor -, wherein a frequency of said electrical signal E1 is configured for varying in function of a control signal CD received by the VFD;
- a powering switch comprising two states, namely an ON state and an OFF state, wherein in the ON state, the powering switch is configured for outputting an electrical signal E2 configured for powering the other motor among said first and second motors - the motor powered by the electrical signal E2 being called hereafter the fixed speed motor or FS motor (the speed of the motor is fixed given that the frequency of the signal E2 is constant), and by analogy the FS motor-driven unit, e.g. the FS compressor, being then the motor-driven unit comprising the FS motor -, and in the OFF state, the powering switch is configured for switching off said FS motor;
characterized in that the control system further comprises:
- a swapping component, e.g. a changeover switch or any combination of different switch(es) and/or control device(s), for switching the powering of the first motor from the electrical signal E1 to the electrical signal E2, and of the second motor from the electrical signal E2 to the electrical signal E1, and vice versa.

Thanks to the swapping component, the FS motor may become the VS motor, and vice versa. This enables to exchange the "roles" of the motor-driven unit's motors, wherein according to a first state of the swapping component, the first motor has the role of the variable speed motor and the second motor has the role of the fixed speed motor, and in a second state of the swapping component, the first motor has the role of the fixed speed motor and the second motor has the role of the variable speed motor. In other words, switching the states of the swapping component switches the "role" of the motors. This provides for instance a great advantage to a climate control system comprising the control system according to the invention, since it enables to align maintenance activities of both compressors of the compressor system of the HVAC system. In particular, the present invention also concerns a HVAC system comprising the control system according to the invention.

Additionally, the present invention further concerns a method for controlling an operation of motor-driven units, e.g. compressors, of a MDU system, e.g. a compressor system, the MDU system comprising a first motor-driven unit, e.g. a first compressor, comprising a first motor and a second motor-driven unit, e.g. a second compressor comprising a second motor, wherein a VFD is configured for outputting an electrical signal E1 configured for powering one motor among said first and second motors - called hereafter the VS motor-, wherein a powering switch is configured for outputting, when it is in an ON state, an electrical signal E2 configured for powering the other motor among said first and second motors - called hereafter the FS motor-, the method comprising:
- switching the powering of the first motor from the electrical signal E1 to the electrical signal E2, and of the second motor from the electrical signal E2 to the electrical signal E1, and vice versa, notably for balancing a number of working hours of the first and second compressors.

While the VFD is able to modulate the frequency of the outputted electrical signal E1 in order to follow variations of the control signal CD, the powering switch is acting as a fixed frequency drive: it is configured for delivering an electrical signal E2 that is characterized by a fixed frequency, operating thus the motor-driven unit whose motor received the electrical signal E2 at a fixed working capacity. Then, the swapping component according to the invention enables to swap the respective drives of the motor-driven units of the MDU system, i.e. swapping the power supplied to the motor-driven units, e.g. the drives of two compressors of a HVAC system are swapped, so that the VFD drive and the fixed frequency drive might be used alternatively with both motor-driven units, which enables to balance a total number of working hours (i.e. the sum of the number of working hours of the first motor-driven unit and of the second motor-driven unit) between the first motor-driven unit and the second motor-driven unit so that their respective number of working hours be similar or substantially identical or within a same range. Indeed, without said swapping component, i.e. without said swapping operation, the VS motor-driven unit would be operating most of the time, while the FS motor-driven unit would operate for instance only for high values of an environmental condition measured within an enclosed space (e.g. for a cooling HVAC system, only during summertime when the temperature in the enclosed space exceeds a predefined value). In particular, without said swapping component, a FS compressor would operate only when the required working capacity of the compressor system comprising said FS compressor and a VS compressor would exceed 50% of the full working capacity of said compressor system (wherein the full working capacity of the compressor system is the sum of the working capacities of each of the compressors comprised in said compressor system, typically the sum of both compressor capacities of a two-compressors system; the working capacity might be calculated or associated to a cooling capacity). Consequently, there would be a huge difference between the number of working hours of the FS compressor and of the VS compressor, requiring typically a replacement of the VS compressor already 3-4 years after its installation, while the FS compressor would only be replaced for instance 12 years after its installation. Additionally, this difference of the working hours prevents also having maintenance activities scheduled at a same time for both compressors. The swapping component according to the invention enables to overcome these discrepancies, by balancing the working hours between the two compressors, and in general, by balancing the working hours between two motor-driven units of an MDU system.

### Description of Embodiments

According to the present invention, said switching or swapping of the respective powering of the motors of the motor-driven units of said MDU system might be implemented manually or automatically. Preferentially, the control system according to the invention comprises a controller connected to the swapping component and configured for controlling said switching of the powering of the first motor from the electrical signal E1 to the electrical signal E2, and of the second motor from the electrical signal E2 to the electrical signal E1, and vice versa. Preferentially, said controller may send a control signal CC to said swapping component for controlling said switching. In particular, a reception of said control signal CC by the swapping component is configured for automatically swapping the respective drives of the motors, so that if the first motor was powered by the electrical signal E1 (and thus the second motor by the electrical signal E2), then the first motor becomes powered by the electrical signal E2 (and thus the second motor by the electrical signal E1), and vice versa.

Preferentially, the VFD comprises at least two inputs and one output, namely a first input and a second input, wherein the first input is configured for being connected to a first electrical source S1 in order to receive an input electrical signal, wherein the VFD is configured for outputting, via its output, said electrical signal E1 which is generated from the received electrical signal by varying its frequency in function of said control signal CD received via the second input in order to control the speed, and optionally torque, of said VS motor in function of said control signal CD.

Preferentially, the powering switch comprises an input configured for being connected to a second electrical source S2 and an output configured for being electrically connected to or disconnected from said powering switch input by changing the state ON-OFF of the powering switch in order to power or not the FS motor. Indeed, in the ON state, the electrical path between the input and the output is closed enabling to power the FS motor, and in the OFF state, the electrical path between the input and the output is open which prevents any powering of the FS motor. Preferentially, the first and the second electrical sources are one and the same electrical source, or might be different electrical sources.

In particular, the swapping component, e.g. said changeover switch, comprises two inputs and two outputs, namely a first output connected to the first motor and a second output connected to the second motor, and a first input connected to the output of the VFD and a second input connected to the output of the powering switch, wherein said swapping component comprises two states, namely said first state, wherein the first input is electrically connected to the first output and the second input is electrically connected to the second output, and said second state, wherein the first input is electrically connected to the second output and the second input is electrically connected to the first output. Thus, the swapping component enables to select, either manually or automatically from the control signal CC, which motor-driven unit among the first and the second among the first and the second compressor, e.g. which compressor among the first and the second compressor, is supplied by an electrical signal with fixed frequency (i.e. the electrical signal E2) or with variable frequency (i.e. the electrical signal E1). Preferentially, the swapping component comprises a third input designed for receiving the control signal CC. For said manual selection of the motor-driven unit, the swapping component may comprise a human-machine interface, like a handle or button, configured for enabling a manual swapping.

Preferentially, the controller according to the invention is configured for measuring or acquiring a number of working hours WH1 of the first motor-driven unit and a number of working hours WH2 of the second motor-driven unit, for computing a difference between WH1 and WH2, and for automatically switching or exchanging the respective powering of the first and second motors by means of the swapping component if said difference exceeds a predefined difference value, notably when an automatic swapping is done, or to share this information with the relevant operation staff, notably when a manual swapping is implemented. For instance, the controller might be configured for automatically sending said control signal CC to the swapping component if said predefined difference value is exceeded.

Said controller might be further configured for measuring or acquiring a parameter used for calculating a required working capacity of the MDU system, e.g. for measuring an environmental condition of an enclosed space, or acquiring a measure of said environmental condition, and for generating said control signal CD in function of said parameter, e.g. of said measured environmental condition, and for sending said control signal CD to the VFD, which will modulate the frequency of the electrical signal E1 in function of the received control signal CD. Typically, the controller might be configured for controlling the powering of the VS motor via the control signal CD sent to the VFD and the powering of the FS motor via a control of the switching state of the powering switch notably by outputting a control signal CS configured for controlling the switching of said states. Said control signal CS is typically configured for controlling a switching of the states of the powering switch. For instance, a reception, by the powering switch, of said control signal CS is configured for automatically switching its state.

Preferentially, the controller is configured for determining, notably in real time, preferentially continuously, and in function of said parameter, e.g. an environmental condition of an enclosed space, said required working capacity of the MDU system. The working capacity of the MDU system is the sum of the working capacities of each of its motor-driven units (e.g. of its compressors, or of its water pumps, or of its power machines). For instance, if a compressor system comprises two compressors, e.g. a compressor C1 and a compressor C2, then the working capacity of the compressor system is equal to the working capacity of the compressor C1 plus the working capacity of the compressor C2. The working capacity of the MDU system may vary between 0-100%, wherein 100% is the full working capacity of the MDU system. For instance, at 100% working capacity of said compressor system, the working capacity of the compressor C1 is 50% and the working capacity of the compressor C2 is also 50%. According to the present invention, we can distinguish two cases:
- case A: as long as said required working capacity of the MDU system remains smaller or equal to a predefined working capacity, e.g. half the full working capacity of said MDU system, then the controller is configured for maintaining the FS motor-driven unit switched off (if it was already switched off) or putting the latter in its switched off state (if it was currently running); and,
- case B: if said required working capacity of the MDU system exceeds said predefined working capacity, e.g. 50% of its full working capacity, notably for a given period of time, then the controller is configured for switching ON the FS motor of the FS motor-driven unit (if it was switched OFF) or for keeping said FS motor running (if it was already switched ON), the latter being configured to operate at said predefined working capacity, e.g. at 50% of its full working capacity, notably as long as said predefined working capacity is exceeded.

For both case A and B, the working capacity of the VS motor-driven unit is adjusted or modulated by the controller for having the working capacity of the MDU system matching said required capacity. In particular, the first motor-driven unit and the second motor-driven unit are identical, or have at least an identical working capacity. Preferentially, the controller is further configured for switching off the FS motor-driven unit when said predefined working capacity is not anymore exceeded by said required working capacity. By this way, when 0-50% of the MDU system working capacity is needed, the controller will start or only use the VS motor-driven unit using the VFD to modulate the speed of the VS motor in function of said parameter, e.g. said measured environmental condition in the enclosed space, and when 50-100% of the MDU system working capacity is required, the controller additionally starts (or maintains activated) the FS motor-driven unit, which is configured for operating at 50% of its full working capacity, the remaining working capacity (between) 0-50% for reaching the required working capacity being provided by adjusting or modulating the speed of the VS motor via VFD.

### Brief Description of the Drawing

Further aspects of the present invention will be better understood through the following drawings, wherein like numbers designate like objects:
Fig. 1 schematic illustration of a HVAC system comprising the control system according to the invention.
Fig. 2 flowchart of a preferred embodiment of main steps of the method according to the invention.
Fig. 3 flowchart of a preferred embodiment of additional steps of the method according to the invention.

### Description of Examples

For the sake of clarity, the detailed description of preferred embodiments of the present invention will be based on a HVAC system comprising two compressors, but the concept of the present invention applies mutatis mutandis to other cooling systems used for other purposes (galley, catering, food conservation, pharmacy, etc....) and also with more than two compressors, or, more generally speaking, to any other type of MDU system comprising several motor-driven units (e.g. a compressor system comprising several compressors, or a water pump system comprising several water pumps, etc.), wherein all motor-driven units of the MDU system are preferentially identical, and wherein the working capacity of said MDU system is modulated based on a required working capacity by splitting the required working capacity between its motor-driven units according to the present invention.

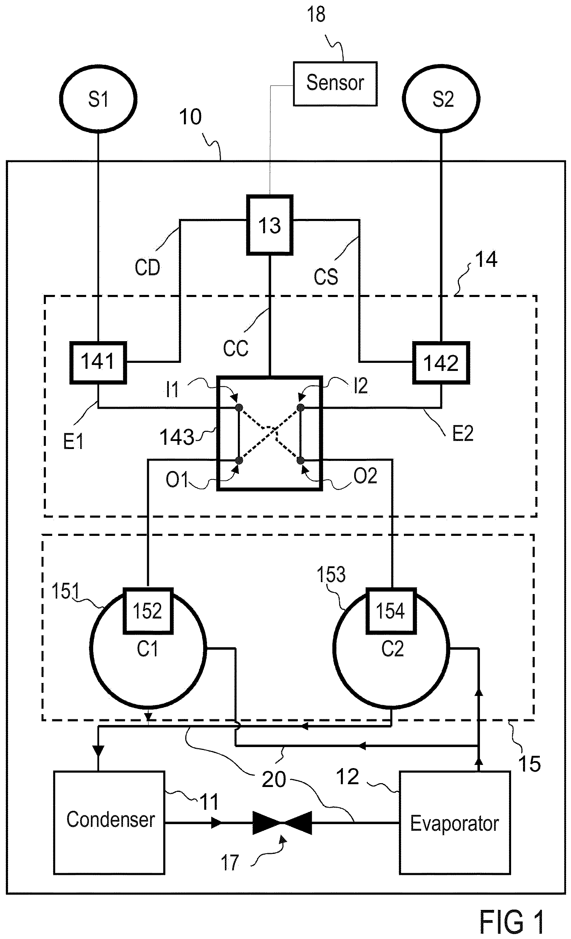

A preferred embodiment of a control system 14 according to the invention is illustrated in Figure 1. It is shown as part of a main system 10, for instance an overall climate control system, which is, in the preferred embodiment shown in Fig. 1, a HVAC system. The main system 10 is configured for controlling or regulating a parameter. For instance, in the case of a climate control system, said parameter might be an environmental condition (e.g. the temperature and/or humidity and/or air renewal rate, etc.) in an enclosed space. Typically, in the case of the main system 10 being an HVAC system, then said main system comprises:
- an MDU system 15 that is, according to Fig. 1, a compressor system , said MDU system 15 comprising a first motor-driven unit 151 that is, in said Fig. 1, a first compressor, said first motor-driven unit comprising a first motor 152 that is the motor of said first compressor, said MDU system 15 comprising a second motor-driven unit 153 that is, in Fig. 1, a second compressor, said second motor-driven unit 153 comprising a second motor 154 that is the motor of the second compressor, wherein said first and second compressors are configured for compressing a refrigerant fluid;
- a condenser 11 for releasing, outside from said enclosed space, heat absorbed from the enclosed space as said refrigerant fluid passes through said condenser 11;
- an evaporator 12 for absorbing heat from the enclosed space as said refrigerant fluid passes through said evaporator 12;
- an expansion valve 17 for enabling an expansion of said refrigerant fluid as it passes through the expansion valve 17;
- a pipe or duct network 20 for enabling a circulation (see the arrows indicating the flow of refrigerant fluid within the ducts) of the refrigerant fluid in a loop passing through at least one of the compressors, then the condenser 11, then the expansion valve 17, then the evaporator 12, and then back to said at least one of the compressors.

Said pipe or duct network 20 may connect for instance each compressor to the condenser 11. For instance, each compressor may comprise an output to which is connected one of said ducts of the duct network, and wherein compressed refrigerant fluid is outputted by the compressor in direction to the condenser 11. The latter is then connected by means of a pipe or hose that preferentially comprises the expansion valve 17 to the evaporator 12. And finally, the evaporator 12 is connected by means of one of said pipes or hoses to an input of each compressor for having the expanded refrigerant fluid again compressed by the compressors, so that a new cycle of compression-expansion of refrigerant fluid can start. In the illustration presented in Fig. 1, the first and second compressors are connected in parallel in a same refrigerating circuit, but other configurations might be possible, wherein the first and second compressors would be for instance connected to separate refrigerating circuits which provide the cooling capacity to the same enclosed envelope, and the pipe network appropriately adapted. Alternatively, each compressor might be connected to its "own" condenser, expansion valve, and evaporator, so that for the first compressor, a first loop of refrigerant fluid is implemented, wherein the refrigerant fluid leaving the first compressor passes through a first condenser, then through a first expansion valve, and finally in a first evaporator, before coming back to the first compressor. The same happens for the second compressor, wherein a second loop of said refrigerant fluid is implemented, wherein the refrigerant fluid leaving the second compressor passes through a second condenser, then through a second expansion valve, and finally in a second evaporator, before coming back to the second compressor, the first loop and second loop being thus two separated loops in the sense that the pipes forming the first loop do not communicate with the pipes forming the second loop (i.e. refrigerant fluid cannot pass from one loop to the other). In any case, the configuration of the pipe network 20 with respect to the first and second compressor is not the subject of the present invention, and different configurations are possible, and can be appropriately implemented by the skilled person.

Indeed, the present invention focuses on the management of the operation of the compressor system 15, and more precisely on the operation of the first and second compressors that are labelled respectively C1 and C2 in Fig. 1. The control system 14 according to the invention is configured for controlling the speed, and optionally torque, of the respective motors of the compressors C1 and C2 of the compressor system . For this purpose, the control system 14 comprises a VFD 141, a powering switch 142, and a swapping component 143, which is preferentially a changeover switch. The VFD 141 is typically connected to a first electrical source S1 that is used for powering the motor of one of the compressors of the compressor system, and the powering switch 142 is typically connected to a second electrical source S2 used for powering the motor of the other one of said compressors of the compressor system. The first electrical source S1 and the second electrical source S2 might be one and a same electrical source that is used for feeding energy to both the first motor 152 and the second motor 154, or might be two different electrical sources, for instance the first electrical source S1 being provided by a vehicle motor, and the second electrical source being an independent battery system. As known in the art, the VFD 141 generates, from the electrical signal received from the first electrical source, an electrical signal E1 whose frequency, or respectively voltage, varies in function of the frequency, or respectively voltage, of said received electrical signal and a received control signal CD. The received control signal CD is used by the VFD 141 for modulating the frequency, or respectively voltage, of its outputted electrical signal E1. The powering switch 142 comprises two states: an ON state according to which it delivers an electrical signal E2 transferred or coming from the electrical signal received from the second electrical source S2, and an OFF state according to which the electrical path to the second electrical source is interrupted, stopping therefore any powering at its output, and thus switching off the compressor motor to which it is electrically connected. While the VFD 141 is acting as a variable frequency (or voltage) drive, the powering switch 142 is acting as a fixed frequency drive, in that the speed of the motor electrically connected to the powering switch 142 is constant based on the second electrical source properties, while the speed of the motor electrically connected to the VFD 141 is modulable in function of the received control signal CD. Preferentially, the electrical signal E2 is identical to the electrical signal received from the second electrical source S2.

According to the present invention, the swapping component 143 comprises two outputs, each one connected to a different compressor C1, C2 of the compressor system and configured for powering the concerned compressor. For instance, it may comprise a first output O1 electrically connected to the first motor 152 for powering the latter, and a second output O2 electrically connected to the second motor 154 for powering the latter. Additionally, the swapping component 143 comprises at least two inputs, each receiving an electrical signal configured for powering one of the compressors C1, C2 of the compressor system. For instance, a first input I1 might be electrically connected to an output of the VFD 141 for receiving said first electrical signal E1, and a second input I2 might be electrically connected to an output of the powering switch 142 for receiving said electrical signal E2 when the latter is in its ON state. The swapping component 143 enables to swap, for each of its outputs, an electrical path between the concerned output and one of the swapping component inputs for an electrical path between said concerned output and the other one of said inputs, and vice versa, so that each output of the swapping component 143 might be connectable one or the other among the VFD 141 and the powering switch 142.

For instance, according to a first state of the swapping component 143, the first input I1 is electrically connected to the first output O1, and the second input I2 is electrically connected to the second output O2, and according to a second state of the swapping component 143, the electrical paths between the respective inputs and outputs are swapped, that is the first input I1 is connected to the second output O2 and the second input I2 is connected to the first output O1 (see the dashed lines within the swapping component 143 in Fig. 1). This enables to exchange the drives of the compressor motors by changing the state of the swapping component 143.

For changing the state of the swapping component 143, e.g. for going from the first state to the second state or vice versa, the swapping component might be operated manually, e.g. by rotating a handle, and/or automatically, e.g. by receiving a control signal CC configured for changing the state of the swapping component 143. If the change of state of the swapping component 143 is controlled by said control signal CC, then the control system 14 according to the invention preferentially further comprises a controller 13 configured for sending said control signal CC to the swapping component 143. If the change of state of the swapping component 143 is configured for being operated manually, then said controller 13 might be configured for measuring working hours of each compressor C1, C2, and for automatically sending a message, e.g. to an operator, said message being configured for promoting the manual swapping. For instance, said controller 13 might be configured for sending such a message when it identifies a difference in the respective working hours of said compressors C1, C2 that is greater than a predefined number of working hours. The controller 13 might be part or not of the control system 14 depending notably on the way the swapping component state change is working. If the controller 13 is not part of the control system 14 according to the invention, it is nevertheless part of the HVAC system 10. Indeed, the controller 13 is configured for generating the control signal CD that is used by the VFD 141 for modulating the frequency of the outputted electrical signal E1. Typically, the controller CD is connected to a sensor 18 for measuring an environmental condition in said enclosed space. The environmental condition is preferentially a physical quantity typically measurable by sensors, like the air temperature and/or humidity and/or purity of the air that are/is measurable in said enclosed space. The HVAC system 10 is thus configured for measuring said environmental condition(s) and for regulating or controlling said environmental condition in the enclosed space by controlling the operation of the compressors C1, C2 which control the transfer of heat between the enclosed space and another space located outside said enclosed space, typically outdoor.

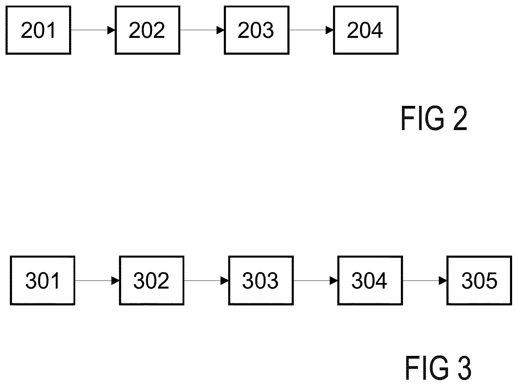

According to the present invention, the change of state of the swapping component 143 is a function of the number of working hours of the respective motor-driven units, i.e. the compressors C1 and C2 in the illustration of Fig. 1. In case of a manually operated swapping component, an operator may check, e.g. at each maintenance or at regular times, the number of working hours of each motor-driven unit, and if their difference is above a predefined difference value, the operator may manually change the state of the swapping component 143, switching therefore the powering of the first motor 152 from the electrical signal E1 to the electrical signal E2, and of the second motor 154 from the electrical signal E2 to the electrical signal E1, or vice versa. Said change of state may also take place automatically, as illustrated by a preferred embodiment of the method in Figure 2. In such a case, said switching takes place at a reception of the control signal CC sent by the controller 13.

For instance, at step 201, the controller 13 may acquire or measure a number of working hours WH1 of the first motor-driven unit 151, e.g. of the first compressor, and a number of working hours WH2 of the second motor-driven unit 153, e.g. the second compressor. For this purpose, the motor-driven units of the MDU system 15 might be connected to the controller for sending data related to their respective number of working hours. At step 202, the controller 13 may compute a difference between WH1 and WH2, and, at step 203, if said difference exceeds said predefined difference value, then the controller 13 automatically sends to the swapping component 143 the control signal CC. At reception of said control signal CC, the swapping component 143 is configured for automatically switching 204 or exchanging, for each of its outputs O1, O2, the electrical connection of the concerned output with one of its inputs for an electrical connection of said concerned output with the other one of said inputs. Therefore, the powering of the first motor 152 is switched from the electrical signal that was currently feeding said first motor (i.e. the electrical signal E1 or the electrical signal E2) to the electrical signal that was feeding the second motor (i.e. resp. the electrical signal E2 or the electrical signal E1), the same applying at the same time mutatis mutandis to the second motor 154. Therefore, changing the state of the swapping component enables a swapping of the current drive (among the VFD and the fixed frequency drive represented by the powering switch) of the compressor motor for the other drive (among said VFD and fixed frequency drive).

Finally, Figure 3 describes more generally a method for controlling an operation of motor-driven units, e.g. compressors, of a MDU system 15, e.g. a compressor system when taking into account variations of a parameter that is used for modulating the working capacity of the MDU system. Said parameter is typically an environmental condition measured in an enclosed space, e.g. a vehicle cabin, in case of a main system 10 being a HVAC system.

At step 301, the controller 13 of the main system 10 might be configured for measuring or acquiring 301 said parameter, e.g. the air temperature within said enclosed space. At step 302, said controller 13 may calculate a required working capacity to be provided by the MDU system 15 (for instance said required working capacity may correspond to a cooling capacity or to a heating capacity to be provided by the HVAC system). At step 303, the controller 13 may then generate, in function of said parameter, at least said control signal CD , and sends, at step 304, the latter to the VFD. In particular, if the required working capacity is less than 50% of the full working capacity of the MDU system 15, then
- if the FS motor-driven unit, e.g. the FS compressor, was currently running, then the controller 13 is configured to generate the control signal CS, the latter being in this case configured for switching OFF the FS motor-driven unit by putting the powering switch 142 in its OFF state, otherwise
- if the FS motor-driven unit, e.g. the FS compressor, was already switched OFF, then the controller 13 is configured for keeping the FS motor-driven unit in its switched OFF state. In particular, the controller 13 may generate or not in this case a control signal CS configured for keeping the FS motor-driven unit in its switched OFF state by keeping the powering switch 142 in its OFF state or may not generate said control signal CS, simply letting the powering switch in its OFF state;

in both previous cases, the control signal CD is configured for adjusting the speed of the motor of the VS motor-driven unit, e.g. the VS compressor, so that its working capacity matches the required working capacity;
otherwise, if the required working capacity is greater than 50% of the full capacity of the MDU system 15, then
- if the FS motor-driven unit, e.g. the FS compressor, was currently running, then the controller 13 is configured for keeping the FS motor-driven unit running. In particular, the controller 13 may generate or not in this case a control signal CS configured for keeping the FS motor-driven unit running by keeping the powering switch 142 in its ON state or may not generate said control signal CS, simply letting the powering switch in its ON state;
- if the FS motor-driven unit, e.g. the FS compressor, was switched OFF, then the controller 13 is configured for generating said control signal CS, the latter being configured in this case for switching ON the FS motor-driven unit FS by putting the powering switch 142 in its ON state,
and, in both previous cases, the control signal CD is configured for adjusting the speed of the motor of the VS motor-driven unit, e.g. the VS compressor, so that its working capacity summed up to the working capacity of the FS motor-driven unit, e.g. of said FS compressor in the present case, equal the required working capacity. At step 303, the controller 13 may send the control signal CD to the VFD 141 and CS to the power switch 142.

In all above cases, the VFD modulates, at step 305, a frequency (or voltage) of the electrical signal E1 in function of the received control signal CD in order to modulate the speed of the motor-driven unit motor receiving said electrical signal E1 in function of said parameter, e.g. said measured environmental condition in the case of a HVAC system. Preferentially, the controller 13 may continuously determine said required working capacity of the MDU system 15, and if said required working capacity remains smaller or equal to a predefined working capacity, e.g. said 50% of the full working capacity, then the controller 13 is configured for maintaining or putting the motor-driven unit connected to the powering switch 142 , i.e. said the FS motor-driven unit, in a switched off state, while the motor-driven unit powered by the VFD 141, i.e. said VS motor-driven unit, is run with a working capacity equal to said required working capacity. Otherwise, if said required working capacity exceeds said predefined capacity (this is the maximum cooling capacity of VS motor-driven unit), then the controller 13 is configured for switching ON or maintaining in a switched ON state the FS motor-driven unit, and for operating the latter at said predefined capacity, while the working capacity of the VS motor-driven unit is equal to the difference between said required working capacity and said predefined working capacity, so that the working capacity of the MDU system 15 meets said required working capacity.

To summarize, the present invention proposes a method and system for swapping the respective drive of motor-driven unit of an MDU system comprising two or more motor-driven units in function of a difference between the working hours of said motor-driven units, so that, after said swapping, the motor-driven unit driven by a VFD be driven by a fixed frequency drive and the motor-driven unit driven by the fixed frequency drive be driven by the VFD. This enables to synchronize maintenance activities of the compressors of said compressor system. Finally, while the present invention has been illustrated with the motor-driven units being compressors and the MDU system being a compressor system comprising said compressors, the concept of the present invention may apply to other systems comprising a set of two or more motorized machines wherein the working capacity of the different machines and their working hours might be modulated or balanced according to the present invention.

## Claims

1. Control system (14) for controlling an operation of motor-driven units of an MDU system (15), the latter comprising a first motor-driven unit (151) comprising a first motor (152) and a second motor-driven unit (153) comprising a second motor (154), said control system (14) comprising:
- a variable frequency drive - hereafter VFD - (141) configured for outputting an electrical signal E1 configured for powering one motor among said first and second motors (152, 154) - the motor being powered by the electrical signal E1 being called hereafter the variable speed motor or VS motor, and by analogy the VS motor-driven unit being then the motor-driven unit comprising the VS motor-, wherein a frequency of said electrical signal E1 is configured for varying in function of a control signal CD received by the VFD (141);
- a powering switch (142) comprising two states, namely an ON state and an OFF state, wherein in the ON state, the powering switch (142) is configured for outputting an electrical signal E2 configured for powering the other motor among said first and second motors (152, 154) - the motor powered by the electrical signal E2 being called hereafter the fixed speed motor or FS motor, and by analogy the FS motor-driven unit being then the motor-driven unit comprising the FS motor -, and in the OFF state, the powering switch (142) is configured for switching off said FS motor;
**characterized in that** it further comprises
- a swapping component (143) configured for switching the powering of the first motor (152) from the electrical signal E1 to the electrical signal E2 and of the second motor (154) from the electrical signal E2 to the electrical signal E1, and vice versa.

2. Control system (14) according to claim 1, wherein the VFD (141) comprises at least two inputs and one output, namely a first input and a second input, wherein the first input is configured for being connected to a first electrical source (S1) in order to receive an input electrical signal, wherein the VFD (141) is configured for outputting, via its output, said electrical signal E1 which is generated from the received input electrical signal by varying its frequency in function of said control signal CD received via the second input in order to control a speed of said VS motor in function of said control signal CD.

3. Control system (14) according to claim 1 or 2, wherein the powering switch (142) comprises an input configured for being connected to a second electrical source (S2) and an output configured for being electrically connected to or disconnected from said powering switch input by changing the state ON-OFF of the powering switch (142) in order to power or not the FS motor.

4. Control system (14) according to claims 2 and 3, wherein the swapping component (143) comprises two inputs and two outputs, namely a first output (O1) connected to the first motor (152) and a second output (O2) connected to the second motor (154), and a first input (11) connected to the output of the VFD (141) and a second input (I2) connected to the output of the powering switching (142), wherein said swapping component (143) comprises two states, namely a first state wherein the first input (11) is electrically connected to the first output (O1) and the second input (I2) is electrically connected to the second output (O2), and a second state, wherein the first input (11) is electrically connected to the second output (O2) and the second input (I2) is electrically connected to the first output (O1).

5. Control system (14) according to one of the claims 1-4, configured for controlling the operation of the first and second motor-driven unit of the MDU system (15), wherein the first motor-driven unit (151) and the second motor-driven unit (153) are identical, or have at least an identical capacity.

6. Control system (14) according to one of the claims 1-5, comprising a controller (13) connected to the swapping component (143) and configured for controlling its switching.

7. Control system (14) according to claim 6, wherein said controller (13) is configured for measuring or acquiring a number of working hours WH1 of the first motor-driven unit (151) and a number of working hours WH2 of the second motor-driven unit (153), for computing a difference between WH1 and WH2, and for automatically switching the respective powering of the first and second motors (152,154) by means of the swapping component (143) if said difference exceeds a predefined difference value or to provide a message/alarm for a manual switching.

8. Control system (14) according to claim 6 or 7, wherein said controller (13) is configured for measuring a parameter, such as an environmental condition of an enclosed space, or for acquiring a measure of said parameter, and for generating said control signal CD in function of a required working capacity based on said parameter and calculated for said MDU system (15), said controller (13) being further configured for controlling the powering of the VS motor via the control signal CD sent to the VFD (141) and the powering of the FS motor via a control of the switching state of the powering switch (142) notably by means of a control signal CS.

9. Control system (14) according to one of the claims 6-8, wherein the controller (13) is configured for continuously determining said required working capacity of the MDU system 15, and, as long as said required working capacity remains smaller or equal to a predefined working capacity, the controller (13) is configured for maintaining the FS motor-driven unit switched off or putting the latter in a switched off state if it was currently running, and if said required working capacity exceeds said predefined working capacity, then the controller (13) is configured for switching ON the FS motor of the FS motor-driven unit or for maintaining the latter running if it was currently operating, said FS motor-driven unit being controlled by the controller for operating at said predefined working capacity.

10. HVAC system for controlling a parameter that is an environmental condition in an enclosed space, said HVAC system comprising:
- a compressor system comprising a first compressor comprising a first motor, and a second compressor comprising a second motor, wherein said first and second compressors are configured for compressing a refrigerant fluid;
- a condenser (11) for releasing, outside from said enclosed space, heat absorbed from the enclosed space as said refrigerant fluid passes through said condenser (11);
- an evaporator (12) for absorbing heat from the enclosed space as said refrigerant fluid passes through said evaporator (12);
- an expansion valve (17) for enabling an expansion of said refrigerant fluid as it passes through the expansion valve (17);
- a sensor (18) for measuring said environmental condition in the enclosed space;
- a pipe network (20) for enabling a circulation of the refrigerant fluid in a loop passing through at least one of the compressors, then the condenser, then the expansion valve, then the evaporator, and then back to said at least one of the compressors;
**characterized in that** it comprises
- a control system (14) according to one of the claims 1-9, wherein the MDU system (15) is said compressor system, the first motor-driven unit being said first compressor, said second motor-driven unit being said second compressor.

11. Method for controlling an operation of motor-driven units of an MDU system (15), the latter comprising a first motor-driven unit (151) comprising a first motor (152) and a second motor-driven unit (153) comprising a second motor (154), wherein a variable frequency drive - hereafter VFD - (141) is configured for outputting an electrical signal E1 configured for powering one motor among said first and second motors (152, 154) - called hereafter the VS motor-, wherein a powering switch (142) is configured for outputting, when it is in an ON sate, an electrical signal E2 configured for powering the other motor among said first and second motors (152, 154) - called hereafter the FS motor-, the method comprising:
- switching (204) the powering of the first motor (152) from the electrical signal E1 to the electrical signal E2, and of the second motor (154) from the electrical signal E2 to the electrical signal E1, and vice versa.

12. Method according to claim 11, comprising:
- performing said switching (204) at a reception of a control signal CC sent by a controller (13) to a swapping component (143) configured for performing said switching (204).

13. Method according to claim 12, comprising:
- acquiring or measuring (201), by a controller (13), a number of working hours WH1 of the first motor-driven unit (151) and a number of working hours WH2 of the second motor-driven unit (153);
- computing (202), by said controller (13), a difference between WH1 and WH2; and
- if said difference exceeds a predefined difference value, automatically sending (203) said control signal CC to the swapping component (143).

14. Method according to one of the claims 11 to 13, comprising:
- measuring (301) a parameter such as an environmental condition of an enclosed space;
- calculating (302) a required working capacity of the MDU system (15) based on the measured parameter;
- generating (303) a control signal CD in function of the required working capacity ;
- sending (304) said control signal CD to the VFD (141);
- modulating (305), by means of the VFD (141), a frequency of the electrical signal E1 in function of the received control signal CD.

15. Method according to claim 14, comprising:
- If said required working capacity remains smaller or equal to a predefined working capacity, then maintaining the motor-driven unit comprising the FS motor switched off or putting the latter in a switched off state; otherwise
- if said required working capacity exceeds said predefined working capacity, then switching ON the FS motor or keeping the FS motor switched ON, and operating the motor-driven unit comprising the FS motor at said predefined working capacity, while adjusting the working capacity of the VS motor so that the working capacity of the MDU system (15) meets said required working capacity.
